# EUROPÄISCHE PATENTANMELDUNG

(11) **EP 0 887 776 A1**
(43) Veröffentlichungstag der Anmeldung: **30.12.1998**
(21) Anmeldenummer: 97110207.4
(22) Anmeldetag: 23.06.1997
(51) Int. Cl.: G07F 19/00, H04L 9/32

(54) **Transaktionseinheit-/Transaktionsverfahren zur Zahlungsabwicklung im Internet und/oder ähnlichen öffentlichen Client-Server-Systemen**

(71) Anmelder: Grunert, Rainer, 65824 Schwalbach a. Ts. (DE)
(72) Erfinder: Grunert, Rainer, 65824 Schwalbach a. Ts. (DE)

(57) **Zusammenfassung**

Verfahren zur Abwicklung von Zahlungen mittels Giralgeld im Internet und/oder ähnlichen öffentlichen Client-Server-Systemen (z.B. T-Online (BTX), Minitel) und zwar unabhängig von Protokollen und Verfahren der Giralgeld ausgebenden/verwaltenden Institute.

Bei dem Verfahren handelt es sich um eine sowohl aus Hardware wie Software bestehenden Einheit, die Transfers, sowohl von Kreditkarten, Euroscheckkarten und sogenanntem Cybergeld (z.B. e-cash) zulässt.

Das Verfahren besteht aus einer zentralen Abwicklung von Transaktionen, und zwar nicht wie bisher auf jedem Rechner eines Verkäufers, sondern zentral auf einem oder mehreren sogenannten Transaktionsrecheneinheiten.

Wird an eine solche Transaktionseinheit, deren physikalischer Standort innerhalb des Netzes unerheblich ist, eine Transaktionsanfrage gerichtet, wird diese dort komplett bearbeitet.

## Beschreibung

### Technisches Gebiet, auf das sich die Erfindung bezieht:

Die Erfindung betrifft ein System zur Abwicklung von Zahlungen mittels Giralgeld im Internet und/oder ähnlichen öffentlichen Client-Server-Systemen (z.B. T-Online (BTX), Minitel).

Bei dem System handelt es sich um eine sowohl aus Hardware wie Software bestehenden Einheit, die Transfers sowohl von Kreditkarten, Euroscheckkarten und sogenanntem Cybergeld (z.B. e-cash) zulässt. Die Erfindung erstreckt sich nicht auf die Hardware- bzw. Software-Komponenten, sondern auf das Verfahren.

### Einschlägiger Stand der Technik:

Zur Zeit ist eine direkte Zahlung über das Internet und ähnliche Systeme mit Giralgeld nicht direkt bzw. nur sehr bedingt möglich.

Nach dem derzeitigen Stand der Technik werden die für eine Transaktion erforderlichen Daten vom Kunden in entsprechende elektronische Formulare eingegeben und an den Verkäufer übermittelt.

Dieser gleicht dann die Daten mit dem entsprechenden Kreditkartenunternehmen bzw. der Cybergeld ausgebenden Bank ab und gibt die vom Kunden bestellte Ware bzw. Dienstleistung frei.

Eine direkte elektronische Freigabe ist bisher nur bei einigen ausgewählten Kreditkarten in den USA möglich.

Für Cybergeld existiert derzeit eine solche Freigabemöglichkeit und eine zentrale Girostelle nicht.

Für alle diese Vorgänge benötigt ein Verkäufer zur Zeit spezielle Soft- und Hardware.

### Darstellung der Erfindung

Die Erfindung löst die, nach dem heutigen Stand der Technik, bestehenden Schwierigkeiten.

Das Verfahren besteht aus einer zentralen Abwicklung von Transaktionen, und zwar nicht wie bisher auf jedem Rechner eines Verkäufers, sondern zentral auf einem oder mehreren sogenannten Transaktionsrecheneinheiten.

Wird an eine solche Transaktionseinheit, deren physikalischer Standort innerhalb des Netzes unerheblich ist, eine Transaktionsanfrage gerichtet, wird diese dort komplett bearbeitet.

Dies bedeutet im Detail, daß die Transaktionseinheit sämtliche Kundeninformationen, die für eine Transaktion notwendig sind, über ein entsprechendes elektronisches Formular vom Kunden anfordert (bis zu diesem Punkt entspricht die Datenabfrage dem Stand der Technik).

Wurde dieses Formular an die Transaktionseinheit abgesandt, prüft diese direkt, je nach Zahlungsmethode, bei allen angeschlossenen Kreditkartenunternehmen bzw. Cybergeld-Banken die Rechtmäßigkeit der Transaktion, führt diese durch und bestätigt diese dem Kunden sowie Verkäufer.

Die Transaktionsdaten verbleiben dabei bei der Transaktionseinheit und werden dem Verkäufer nicht mitgeteilt.

### Beschreibung der Ausführung der Erfindung

Eine solche Transaktionsrechencinheit besteht aus mehreren Hardware- und Softwarekomponenten, deren Funktionsweise hier beschrieben werden soll.

Alle beschriebenen Daten können sowohl verschlüsselt, als auch unverschlüsselt übermittelt werden. Hierfür können bestehende und neue Verschlüsselungsalgorithmen eingesetzt werden.

Eine Transaktionsanfrage von dem Rechner eines Verkäufers enthält: eine bzw. mehrere Identifizierungsnummern und einen oder mehrere Transaktionsbeträge, sowie eine bzw. mehrere Währungskennungen.

Die Transaktionseinheit prüft nun die Rechtmäßigkeit der Anfrage. Dafür verwendet Sie bestehende bzw. neu zu entwickelnde Authorisierungsmethoden.

Ebenso verwendet sie bestehende bzw. neu zu entwickelnde Firewalllösungen um unauthorisierte Anfragen bzw. Datenzugriffe zu vermeiden.

Nach der Prüfung der Verkäuferdaten erzeugt die Transaktionseinheit ein Formular, in das der Kunde die Art der Transaktion, z.B. Kreditkarte, Euroscheckkarte, Cyber-Geld oder andere mögliche eingibt.

Dabei hat der Kunde die Möglichkeit, verschiedene zur Zeit mögliche Übertragungsmodelle zu wählen. Z.B. Transparent für eine unverschlüsselte Übertragung, SET für eine Übertragung gemäß dem Secure Electronic Transaction Standard, etc.

Nach Absenden dieses Formulares stellt die Transaktionseinheit eine Verbindung zu dem jeweiligen Kreditkartenunternehmen bzw. der entsprechenden Cyber-Geld Bank her.

Diese Verbindung wird über eine weitere, technisch separate Computer-Einheit, hergestellt. Dies geschieht unter Nutzung der sogenannten POS Protokolle. Dies sind die Protokolle, mit denen Kreditkartenunternehmen z.B. mit Tankstellen abrechnen. In Deutschland wäre dieses Protokoll das ISO 8583 GICC. Die physikalische Trennung der Rechnereinheiten ist ein weiterer Schutz gegen elektronische Angriffe, jedoch nur zwingend notwendig, wenn sich das Protokoll der Giralgeld abrechnenden Stelle vom Internet bzw. ähnlichen öffentlichen Client-Server-Systemen (z.B. T-Online (BTX), Minitel) unterscheidet.

Handelt es sich um einen Zahlungswunsch mittels Cyber-Geld, stellt dieser Rechner statt mit dem Kreditkartenunternehmen eine Verbindung mit der entsprechenden Bank bzw. dem Cyber-Geld-Verwalter her und führt die Transaktion aus.

Abwicklungen nach dem SET Standard werden direkt über entsprechende im Internet basierte Systeme abgewickelt.

Nach erfolgter Transaktion, diese Zeiten liegen im Millisekundenbereich, wird dem Rechner des Verkäufers mitgeteilt, ob die Transaktion erfolgreich bzw. z.B. mangels Deckung oder Sperrung fehlgeschlagen ist.

In regelmäßigen Zeitabständen werden die im Auftrag der Verkäufer eingezogen Mittel auf deren Konten transferiert.

### Vorteilhafte Wirkungen der Erfindung

Die Erfindung erlaubt es, Zahlungen von Kreditkarten jeder Art, sowie Bankkarten jeder Art, sowie Euroscheckkarten und Cyber Geld über das Internet und/oder ähnlichen öffentlichen Client-Server-Systemen (z.B. T-Online (BTX), Minitel) abzuwicklen und zwar **unäbhängig** von Protokollen und Verfahren der Karten bzw. Cyber-Geld ausgebenden Institute.

Für jede Transaktion ist für den Kunden optimaler Datenschutz gewährleistet, da der Verkäufer nicht mit den Kundendaten in Berührung kommt.

Jeder Verkäufer kann dieses System nutzen ohne spezielle Verträge mit allen Kreditkartenunternehmen bzw. Cyber-Geld-Banken zu schließen.

## Patentansprüche

1. Transaktionseinheit zur Abwicklung von Internet-Zahlungen mittels Kreditkarten mit und ohne SET, Euroscheckkarten, Bankkarten und Cyber-Geld.

2. Verwendung einer solchen Transaktionseinheit und der/des beschriebenen Verfahren/s zur Abwicklung von Internet-Zahlungen mittels Kreditkarten mit und ohne SET, Euroscheckkarten, Bankkarten und Cyber-Geld.
